# DEMANDE DE BREVET EUROPEEN

(11) **EP 1 233 642 A1**
(43) Date de publication de la demande: **21.08.2002**
(21) Numéro de dépôt: 02290384.3
(22) Date de dépôt: 18.02.2002
(51) Int. Cl.: H04Q 7/38, H04Q 7/36

(54) **Méthode d'allocation de ressources de transmission**

(30) Priorité: 20.02.2001 FR 0102435
(71) Demandeur: Mitsubishi Electric Information Technology Centre Europe B.V., 1101 AG Amsterdam Zuidoost (NL)
(72) Inventeur: Voyer, Nicolas, Mitsubishi Electricité, 35700 Rennes (FR)
(74) Mandataire: Maillet, Alain

(57) **Abrégé**

Méthode d'allocation de ressources de transmission à une pluralité de communications entre une station de base et une pluralité de terminaux mobiles dans laquelle, pour une communication avec un terminal mobile donné, on sélectionne un critère d'allocation de ressources de transmission parmi une pluralité de critères prédéterminés, la sélection dudit critère étant effectuée à partir d'une grandeur caractéristique des pertes de propagation entre ledit terminal mobile et la station de base.

## Description

La présente invention concerne de manière générale une méthode d'allocation de ressources de transmission pour un système de télécommunication mobile, plus particulièrement pour un système de type TD/CDMA, par exemple un système de télécommunication de type UTRA-TDD.

Dans le système l'UMTS (*Universal Mobile Telecommunication System*), le réseau d'accès, dénommé UTRAN (pour *UMTS Terrestrial Radio Access Network),* assure la liaison entre le terminal mobile de l'usager (MS pour *Mobile Station*) et le réseau d'interconnexion (CN pour *Core Network).* Il comporte des contrôleurs de réseau d'accès (RNC pour *Radio Network Controller*) et des stations de base (*B nodes*), chaque contrôleur RNC pouvant contrôler une pluralité de stations de base. Les liaisons descendantes entre la station de base et les terminaux mobiles qui en dépendent sont séparées des liaisons montantes soit par l'utilisation de fréquences différentes, mode dit duplex en fréquence ou FDD (pour *Frequency Division Duplex)* soit par des plages temporelles de transmission différentes, mode dit duplex en temps ou TDD (pour *Time Division Duplex*).

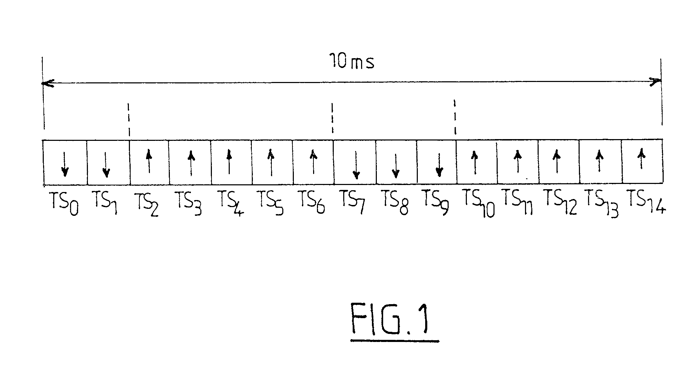

La Fig. 1 représente de manière schématique un exemple de trame de transmission dans un système de télécommunication UTRA-TDD (*UMTS Terrestrial Radio Access Network in TDD mode).* La trame de transmission a une durée totale de 10ms et est divisée en 15 intervalles de transmission *(time slots)* notés TS₀ à TS₁₄. La trame de transmission est également divisée en au moins deux plages temporelles distinctes (partition duplex) allouées respectivement aux liaisons montantes (symbolisées par des flèches montantes) et aux liaisons descendantes (symbolisées par des flèches descendantes). La séparation entre plages temporelles consécutives est appelée point de commutation. Une trame présente en général plusieurs points de commutation. Afin de réduire les interférences, les stations de base adjacentes sont synchrones entre elles et possèdent des points de commutation identiques. La séparation des différentes communications montantes (ou descendantes) au sein d'une même cellule est assurée par des séquences d'étalement (dits signatures) utilisant des codes orthogonaux. Les communications, montantes ou descendantes, au sein d'une cellule sont isolées des communications d'une cellule adjacente grâce à des codes dits codes de brouillage (*scrambling codes).* Afin de réduire les interférences inter-cellulaires, les codes de brouillage relatifs à des cellules adjacentes sont choisis de manière à présenter un faible niveau d'intercorrélation.. Cependant, du fait notamment de la dispersion des retards induite par la propagation multi-trajet, cette faible intercorrélation des codes de brouillage n'est pas vérifiée en pratique à la réception. Il en résulte que les données transmises à un instant donné au sein d'une cellule peuvent être perturbées par des données transmises au même instant au sein d'une cellule adjacente. Cette perturbation ou interférence intercellulaire est variable car elle dépend de nombreux facteurs, entre autres des codes d'étalement (*spreading codes),* des codes de brouillage, des puissances d'émission et des caractéristiques des différents canaux de transmission des différents usagers. Par la suite, on désignera simplement par code la combinaison d'un code d'étalement et d'un code de brouillage.

De manière générale, nous considérerons un système de télécommunication de type TD/CDMA (*Time Duplex*/ *Code Division Multiple Access*), c'est-à-dire un système à division d'accès multiple à la fois temporelle et par code. Chaque communication se voit allouer une ressource temporelle (un intervalle de transmission au sein d'une trame) et une ressource d'accès multiple (un code) à cet intervalle de transmission. Les codes sont organisés en groupes, des groupes de codes distincts étant attribués à des stations de base adjacentes et les codes au sein d'un même groupe étant orthogonaux entre eux. En d'autres termes, la partition en groupes de codes sert à séparer les communications de deux cellules adjacentes et la partition des codes au sein d'un même groupe sert à séparer les communications à l'intérieur d'une cellule.

Pour combattre les interférences inter-cellulaires, il a été proposé une allocation dynamique des ressources de transmission disponibles au niveau de la station de base, désignée par FDCA (*Fast Dynamic Channel Allocation*).

Diverses stratégies d'allocation dynamique sont connues de l'état de la technique.

On supposera par la suite, pour simplifier l'exposé, que l'on se limite à un ensemble de communications montantes ou à un ensemble de communications descendantes. Il est clair, cependant, que la méthode d'allocation dynamique doit opérer sur l'un et sur l'autre, de manière indépendante.

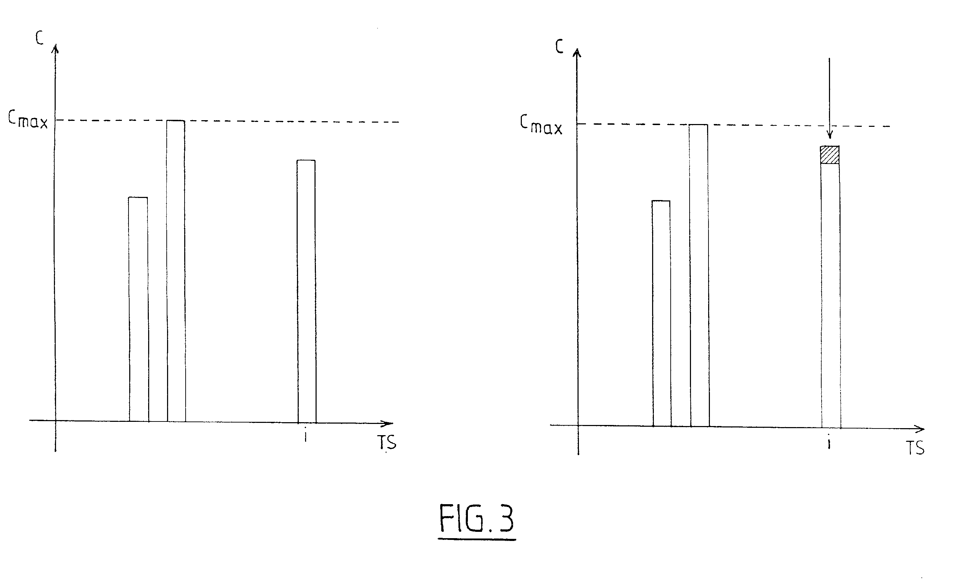

Une première technique d'allocation dynamique utilise un critère du plus faible niveau d'interférence. Selon cette technique, une station de base transmet régulièrement aux terminaux mobiles qu'elle sert une requête de mesure. Sur réception d'une telle requête, chaque terminal mobile effectue une mesure de niveau d'interférence et en transmet le résultat à la station de base. La station de base mesure également le niveau d'interférence au sein de chaque intervalle de transmission. Lorsqu'une nouvelle communication doit être établie, la station de base choisit, à partir de ces mesures, l'intervalle de transmission présentant le plus faible niveau d'interférence. La communication est ensuite établie sur l'intervalle choisi et sur un code libre à l'intérieur de cet intervalle. Le choix de l'intervalle de transmission présentant le plus faible niveau d'interférence a pour conséquence que la puissance de transmission nécessaire à la nouvelle communication ne sera pas trop élevée. En outre, l'interférence supplémentaire produite par cette dernière sera elle aussi peu importante. On obtient ainsi un niveau moyen d'interférence plus faible que celui qui résulterait d'une allocation d'intervalle de transmission aléatoire. La Fig. 3 donne un exemple d'allocation selon cette méthode. Le diagramme de gauche représente le niveau d'interférence mesuré pour les différents intervalles de transmission. L'intervalle d'indice *i* présentant le plus faible niveau d'interférence est retenu pour l'allocation de ressources à une nouvelle communication. Le diagramme de droite exprime le nombre de codes alloués en fonction de l'intervalle de transmission. Le pavé hachuré illustre les ressources allouées à la nouvelle communication.

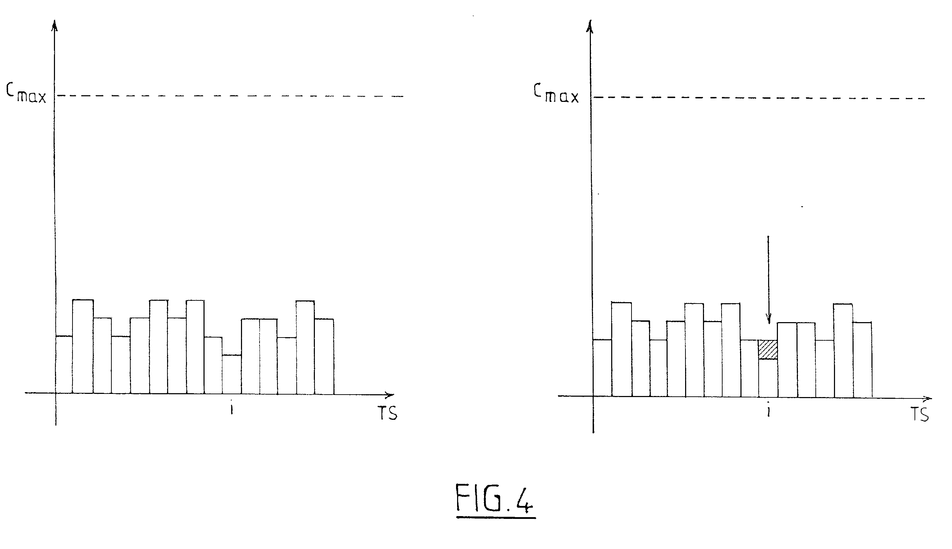

Une seconde méthode d'allocation dynamique connue utilise un critère de condensation des ressources temporelles. Elle consiste à allouer à une nouvelle communication l'intervalle de transmission (non saturé en codes) présentant le plus grand nombre de codes alloués. On obtient ainsi une concentration maximale de communications sur un nombre minimal d'intervalles de transmission, ce qui permet de libérer le plus grand nombre d'intervalles de transmission disponibles. Les codes au sein d'un même intervalle étant orthogonaux, les signaux des différentes communications n'interfèrent pas entre eux, dans la mesure toutefois où les canaux de transmission ne perturbent pas cette orthogonalité. Les cellules adjacentes à la cellule considérée pourront ainsi se voir attribuer des intervalles de transmission inoccupés avec des codes non orthogonaux à ceux utilisés dans ladite cellule. Cette technique permet a priori de réduire à la fois l'interférence extra-cellulaire, puisque des cellules adjacentes utilisent des intervalles de transmission distincts, et l'interférence intra-cellulaire, puisque les communications au sein d'un même cellule utilisent au maximum des codes orthogonaux. La Fig. 4 donne un exemple d'allocation selon cette méthode. Les diagrammes de gauche et de droite représentent le nombre de codes alloués en fonction de l'intervalle de transmission, avant et après l'allocation de ressources à une nouvelle communication. Cₘₐₓ indique le nombre maximum de codes disponibles par intervalle. On voit que l'intervalle d'indice *i* est alloué car il est celui qui présente le plus grand nombre de codes déjà attribués tout en offrant encore un code disponible.

Les deux techniques d'allocation décrites ci-dessus présentent l'une et l'autre des inconvénients.

En effet, selon la première technique, deux mobiles proches, mais situés dans deux cellules adjacentes, peuvent se voir allouer un même intervalle de transmission parce que celui-ci est, pour l'une et pour l'autre, celui qui présente le niveau d'interférence le plus faible. Cependant les codes qui seront alloués ne seront pas orthogonaux entre eux puisqu'ils appartiennent à des cellules distinctes et donc à des groupes de codes distincts. Paradoxalement, ces deux mobiles qui utiliseront l'intervalle de transmission a priori le moins interféré se trouveront dans une situation où ils interféreront mutuellement de manière significative.

Quant à la seconde technique, elle nécessite de fait une planification cellulaire des ressources temporelles. Pour deux cellules adjacentes, la condensation des intervalles de transmission doit se faire dans des intervalles distincts. En effet, une condensation dans un intervalle commun aboutirait à une interférence catastrophique entre les communications des deux cellules utilisant cet intervalle, d'autant qu'il serait fortement occupé. Or, l'on sait qu'une telle planification cellulaire est non seulement complexe à mettre en oeuvre mais surtout conduit à une utilisation sous-optimale des ressources au niveau d'un ensemble de cellules voisines : une cellule à faible trafic adjacente à une cellule à fort trafic pourrait en effet inutilement immobiliser des ressources dont cette dernière aurait besoin.

Le problème à la base de l'invention est de proposer une méthode d'allocation dynamique ne présentant pas les inconvénients des méthodes exposées ci-dessus.

Ce problème est résolu par une méthode d'allocation de ressources de transmission à une pluralité de communications entre une station de base et une pluralité de terminaux mobiles selon laquelle, pour une communication avec un terminal mobile donné, elle sélectionne un critère d'allocation de ressources parmi une pluralité de critères d'allocation prédéterminés, la sélection dudit critère étant effectuée à partir d'une grandeur caractéristique des pertes de propagation entre ledit terminal mobile et la station de base.

Avantageusement, ladite grandeur caractéristique est fonction de la distance entre ledit terminal mobile et la station de base. Ladite grandeur caractéristique peut également être fonction du coefficient de couplage entre l'antenne dudit terminal mobile et l'antenne de la station de base.

Lesdites ressources comprennent typiquement des intervalles et des codes de transmission, un ensemble de codes étant associé à chaque intervalle.

Ladite pluralité de critères comprend de préférence un premier critère d'allocation attribuant à une nouvelle communication l'intervalle de transmission présentant le plus faible niveau d'interférence.

Selon un premier mode de réalisation ladite pluralité de critères comprend un second critère d'allocation attribuant à une nouvelle communication l'intervalle de transmission présentant le plus faible nombre non nul de codes non encore alloués.

Selon un second mode de réalisation, ladite pluralité de critères comprend un troisième critère d'allocation attribuant à une nouvelle communication l'intervalle de transmission présentant le plus grand nombre de codes non encore alloués.

Avantageusement, selon le premier mode de réalisation, le premier critère est sélectionné lorsque les pertes de propagation sont faibles et que le second critère est sélectionné lorsque les pertes de propagation sont élevées.

Avantageusement, selon le second mode de réalisation, le premier critère est sélectionné lorsque les pertes de propagation sont faibles et que le troisième critère est sélectionné lorsque les pertes de propagation sont élevées.

Les caractéristiques de l'invention mentionnées ci-dessus, ainsi que d'autres, apparaîtront plus clairement à la lecture de la description faite en relation avec les dessins joints, parmi lesquels :
La Fig. 1 représente une trame de transmission utilisée dans un système UTRA-TDD ;

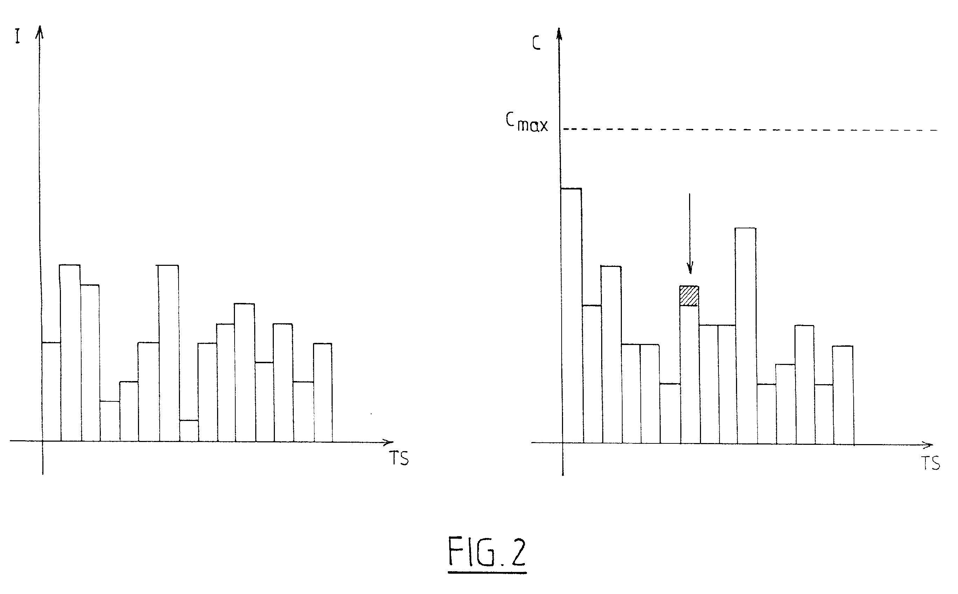

La Fig. 2 représente un exemple d'allocation selon un premier critère connu de l'état de la technique ;
La Fig. 3 représente un exemple d'allocation selon un second critère connu de l'état de la technique ;
La Fig. 4 représente un exemple d'allocation selon un troisième critère;
La Fig. 5 représente un organigramme de la méthode d'allocation selon un mode de réalisation de l'invention ;

L'idée générale à la base de l'invention est d'utiliser une méthode d'allocation dynamique faisant appel à plusieurs critères, des critères différents étant appliqués en fonction des pertes de propagation entre le terminal mobile et la station de base. Lorsque ces pertes sont élevées, par exemple lorsque le terminal mobile est en périphérie de cellule, on sélectionnera un critère privilégiant la réduction de l'interférence extra-cellulaire. En revanche, lorsque ces pertes sont faibles, par exemple lorsque le terminal mobile est proche de la station de base, on sélectionnera un autre critère d'allocation, accordant par exemple la priorité à la réduction de l'interférence intra-cellulaire ou à une utilisation optimale des ressources au niveau d'un ensemble de cellules voisines.

Selon un premier mode de réalisation de l'invention, la méthode d'allocation dynamique sélectionne le critère du plus faible niveau d'interférence lorsque le terminal mobile se trouve en deçà d'une distance prédéterminée de la station de base et le critère de condensation des ressources temporelles au delà.

Selon un second mode de réalisation de l'invention, la méthode d'allocation dynamique sélectionne le critère du plus faible niveau d'interférence lorsque le terminal mobile se trouve en deçà d'une distance prédéterminée de la station de base et un critère d'étalement des ressources temporelles au delà.

La Fig. 4 illustre un exemple d'allocation selon ce critère d'étalement. Selon ce critère, l'intervalle de transmission présentant le nombre de codes disponibles le plus élevé sera alloué à une nouvelle communication. A l'inverse du critère de condensation, on vise ici à obtenir la distribution temporelle des ressources la plus large possible. Les diagrammes de gauche et de droite représentent le nombre de codes alloués en fonction de l'intervalle de transmission, respectivement avant et après l'allocation de ressources à une nouvelle communication. Dans cet exemple, l'intervalle d'indice *i* est le moins occupé et est donc alloué. L'avantage d'un tel critère se manifeste surtout en périphérie de cellule. Ce large étalement temporel permet une réduction de l'interférence extra-cellulaire moyenne.

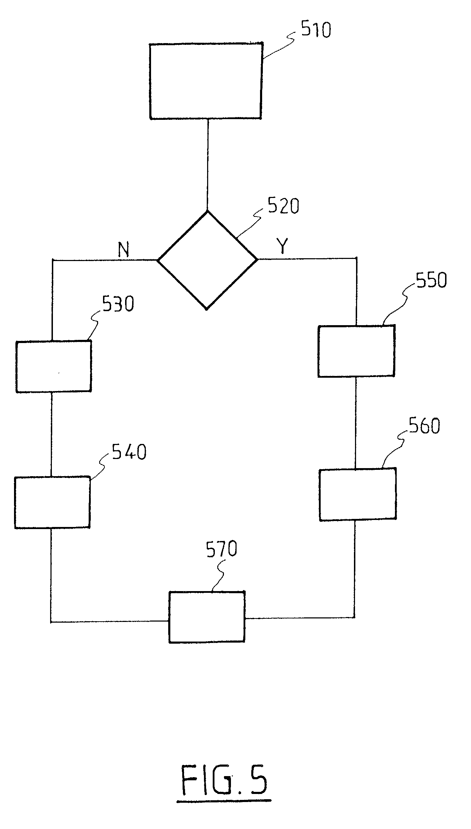

La Fig. 5 illustre un organigramme simplifié d'un exemple de la méthode selon l'invention.

La méthode d'allocation débute par une étape 510 d'évaluation de la distance entre le terminal mobile et la station de base. Alternativement, on mesure le coefficient/ la perte de couplage entre l'antenne du terminal mobile et celle de la station de base. De manière générale, on évalue une grandeur caractéristique fonction des pertes de propagation entre le terminal mobile et la station de base.

Cette grandeur caractéristique est comparée à un seuil en 520. Selon le résultat de la comparaison, on sélectionne un premier critère ou un second critère. Si la comparaison 520 conclut à de faibles pertes de propagation (ou à une distance faible), on poursuit en 530 par la mesure des niveaux d'interférences dans les différents intervalles de transmission. On recherche en 540 l'intervalle présentant le niveau d'interférence le moins élevé et l'on choisit un code disponible dans cet intervalle. En revanche, si la comparaison 520 conclut à de fortes pertes de propagation (ou à une distance élevée), on poursuit en 550 par l'évaluation des ressources allouées et l'on recherche en 560 l'intervalle de transmission présentant le plus grand nombre de codes disponibles (critère d'étalement). On choisit également un code disponible dans cet intervalle. Alternativement, on recherche en 560 l'intervalle de transmission non saturé présentant le plus faible nombre de codes disponibles (critère de condensation) et l'on choisit un code disponible dans cet intervalle. Enfin, à l'étape 570, on alloue l'intervalle et le code ainsi sélectionnés à la nouvelle communication.

Pour de faibles pertes de propagation, par exemple pour des terminaux mobiles proches de la station de base, les signaux sont émis à faible puissance de sorte qu'ils ne génèrent, en tout état de cause, qu'une faible interférence extra-cellulaire. On peut donc opter pour le critère du plus faible niveau d'interférence.

En revanche, pour de fortes pertes de propagation, par exemple pour des terminaux mobiles éloignés de la station de base ou occultés par des obstacles, les signaux sont *a priori* émis à puissance élevée et donc leur incidence sur le niveau d'interférence extra-cellulaire est significative. On peut alors opter pour un critère de condensation des ressources temporelles. En effet, il est préférable que la nouvelle communication utilise un intervalle déjà fortement alloué et donc probablement peu ou pas utilisé par les cellules adjacentes (de manière à minimiser l'interférence extra-cellulaire). En outre, les codes alloués sur cet intervalle étant orthogonaux, les signaux qui les utilisent, bien que de forte puissance, interféreront peu entre eux. Même si les canaux de transmission ne préservent par l'orthogonalité des codes, l'interférence intra-cellulaire générée pourra être annulée par des moyens de détection multi-utilisateur au niveau du récepteur. Alternativement, on peut opter, notamment dans les situations de fort trafic, pour un critère d'étalement des ressources temporelles. Cet étalement permet de réduire, par un effet de moyennage statistique le niveau d'interférence extra-cellulaire .

## Revendications

1. Méthode d'allocation de ressources de transmission à une pluralité de communications entre une station de base et une pluralité de terminaux mobiles **caractérisé en ce que**, pour une communication avec un terminal mobile donné, elle sélectionne un critère d'allocation de ressources parmi une pluralité de critères d'allocation prédéterminés, la sélection dudit critère étant effectuée à partir d'une grandeur caractéristique des pertes de propagation entre ledit terminal mobile et la station de base.

2. Méthode d'allocation selon la revendication 1, **caractérisée en ce que** ladite grandeur caractéristique est fonction de la distance entre ledit terminal mobile et la station de base.

3. Méthode d'allocation selon la revendication 1, **caractérisée en ce que** ladite grandeur caractéristique est fonction du coefficient de couplage entre l'antenne dudit terminal mobile et l'antenne de la station de base.

4. Méthode d'allocation selon l'une des revendications précédentes, **caractérisée en ce que** lesdites ressources comprennent des intervalles et des codes de transmission, un ensemble de codes étant associé à chaque intervalle.

5. Méthode d'allocation selon la revendication 4, **caractérisée en ce que** ladite pluralité de critères comprend un premier critère d'allocation attribuant à une nouvelle communication l'intervalle de transmission présentant le plus faible niveau d'interférence.

6. Méthode d'allocation selon la revendication 4, **caractérisée en ce que** ladite pluralité de critères comprend un second critère d'allocation attribuant à une nouvelle communication l'intervalle de transmission présentant le plus faible nombre non nul de codes non encore alloués.

7. Méthode d'allocation selon la revendication 4, **caractérisée en ce que** ladite pluralité de critères comprend un troisième critère d'allocation attribuant à une nouvelle communication l'intervalle de transmission présentant le plus grand nombre de codes non encore alloués.

8. Méthode d'allocation selon les revendications 5 et 6, caractérisée en que le premier critère est sélectionné lorsque les pertes de propagation sont faibles et que le second critère est sélectionné lorsque les pertes de propagation sont élevées.

9. Méthode d'allocation selon les revendications 5 et 7, caractérisée en que le premier critère est sélectionné lorsque les pertes de propagation sont faibles et que le troisième critère est sélectionné lorsque les pertes de propagation sont élevées.
